# EUROPEAN PATENT APPLICATION

(11) **EP 4 524 060 A1**
(43) Date of publication of application: **19.03.2025**
(21) Application number: 23198082.2
(22) Date of filing: 18.09.2023
(51) Int. Cl.: B65G 1/04, B65G 1/06, B66B 9/00

(54) **ELEVATOR SYSTEM**

(71) Applicant: MOVU, 9160 Lokeren (BE)
(72) Inventor: Tacq, Andries, 8700 Tielt (BE)
(74) Representative: IP HILLS NV

(57) **Abstract**

An elevator system (10) for transporting a shuttle with a payload in vertical direction between at least two levels in an automated warehouse (1). Elevator system is physically integrated into the racking system of the automated warehouse, and may share some of its vertical support beams (21) with the racking system of the warehouse.

## Description

### Field of the Invention

The present invention generally relates to elevator systems adapted to transport payloads and shuttles between levels of an automated warehouse comprising at least one lane with one or a plurality of levels and being equipped with at least one shuttle adapted to move in horizontal direction on different levels of the lane. The invention further relates to automated warehouse, automated multi-level warehouses and automated multi-level multi-lane warehouses, being equipped with at least one shuttle adapted to move in horizontal direction on one or different levels of the lane and comprising at least one lift system.

### Background of the Invention

Automated warehouses and automated warehouse shuttle systems are generally known. Warehouses may include relatively large storage structures, generally structured along a plurality of substantially parallel lanes. The storage structures are arranged to provide standardized storage locations for goods, often palletized goods. These storage locations may be provided on a plurality of levels within the storage structure. In order to automate delivery and pick up of goods to and from said storage locations, automated warehouses can include an automated warehouse shuttle system.

Said shuttle systems generally include a track system including at least one pair of rails arranged in a substantially horizontal plane along a lane of the warehouse, or more generally speaking, at least one pair of rails along each of the lanes of the warehouse, which are generally arranged substantially in parallel to each other, and more preferably, a pair of rails per level and per lane of the warehouse. Transverse aisles may connect said substantially parallel lanes, which transverse lanes may or may not be provided with tracks.

The system further includes warehouse shuttles, in particular mobile robots, which are configured to move along said tracks, and which are configured to transport goods and/or goods carriers to and from said storage locations in the storage structure. An automated shuttles system can comprise a plurality of automated shuttles which are often integrated into, and controlled by, a traffic manager and/or a central warehouse management system.

Lift systems may be provided to lift the goods, often palletized goods, between various levels of the storage structure. These lift systems typically comprise one or more load handing devices. Such load handing devices may comprise a set of forks to carry the goods, referred to as payload. The forks carrying the payload, together with a load carrying means may vertically displace the payload to one of the levels of the warehouse, usually in front of a lane of the warehouse. The lift could also compromise another type of load-handling device chain conveyors, which can carry the goods or payload. They can also bring the payload into a lane that compromises another chain conveyor. If both chain conveyors are working, a movement of the pallet can take place. The lift could also compromise another type of load-handling: 2 rails similar to the rails in the lanes in the rack. This Load handling device does not allow the movement the payload itself, a shuttle can move the payload in this case. Once brought at the level intended, the payload is put on a support structure in the lane, and/or is taken by a shuttle which will bring the payload to the intended position in the warehouse. The shuttles' movement may be restricted to different positions at one and the same level, via displacement on the tracks in the lanes and, if present, via the transverse aisles.

Lift systems may be provided to move the shuttles themselves between various levels of the storage structure, the so called 'Roaming' of shuttles. These lift systems typically comprise one or more load-handling devices. Such load-handing devices may comprise a set of forks, chain conveyors or shuttle rails or something else to carry the goods, referred to as payload and have the posibiltiy to also transport a shuttle. Once brought at the level intended, the shuttle can drive out of the lifting system into a lane or is put by a device on the lifting system in such a lane, for instance with a set of forks.

Lift systems typically take more surface space than the footprint of a single standardized storage location. Often require the lift systems a particular positioning of the lift system to allow efficient loading and unloading of the warehouse shuttles in the desired direction. This positioning may not integrate well into the storage structures of the automated warehouse.

### Summary of the Invention

To this aim, according to a first aspect of the invention, there is provided an elevator system for transporting a shuttle with a payload in vertical direction between at least two levels in an automated warehouse comprising at least one lane on each level, said shuttle being adapted to move in horizontal direction on said lane on each level, said elevator system comprising an elevator shaft, comprising at least four vertical support beams positioned in parallel in four corners of said elevator shaft and defining a hoist way of said elevator shaft, braces arranged between said vertical support beams and providing structural support to said elevator shaft, said braces leaving accessible openings at a front and rear side of said elevator shaft for said shuttle with the payload to enter and exit said elevator shaft, a vertical guide rail arranged at each lateral side of said elevator shaft, an elevator car movable in vertical direction within the hoist way of the elevator shaft, the elevator car comprising a horizontal loading platform provided with a first support structure adapted to carry the shuttle during the vertical and/or horizontal movement, two roller pairs centrally arranged on each lateral side of said elevator car, and configured to engage with each of said vertical guide rails, two pairs of suspension points, each pair of suspension points distributed at equal distances from said roller pair on said lateral side of said elevator car, four power transmission means configured to attach to said suspension points of said elevator car, configured to loop around a return wheel assembly and configured to engage with a motor, said motor configured to provide a balanced traction to said four power transmission means for hoisting said elevator car in a vertical direction, said motor being installed outside of said hoist way, said return wheel assembly configured above a highest hoisting point at each lateral side of said elevator shaft to loop and return two of said four power transmission means, and wherein said return wheel assembly guides said power transmission means between each lateral side of said elevator shaft and said elevator car.

An automated warehouse typically is a large storage structure that is configured to receive goods for storage, and often provides standardized storage locations to these goods, often palletized goods. The size of the standardized storage locations is determined by the maximum size of these standardized goods or the size of a standardized palletized good. The minimal size for such a standardized storage location is therefore determined by the maximum width, depth and height of the standardized good.

An elevator system in an automated warehouse is a device that moves the standardized and preferably palletized goods from one floor to another. The elevator system essentially comprises an elevator car that moves vertically inside an elevator shaft.

The elevator shaft is the physical structure or enclosure that houses the hoist way. The term hoist way typically refers to the free open, vertical space within which the elevator car and the other moving components operate. It encompasses the entire vertical passage from the top of the elevator shaft to the bottom, not including the guide rails, not including the mechanical components like the hoisting machinery or motor, and not including the structural elements of the elevator shaft.

The hoist way includes the elevator car's path of travel and is considered the complete, functional area within which the elevator car with the loaded goods operates.

The elevator shaft may comprise four vertical support beams or uprights, that delimit the volume of the shaft. The four vertical support beams thereby define four sides of the shaft, which can be identified by a front side and a rear side, and by two lateral sides. Braces are typically applied between the vertical support beams to reinforce the elevator shaft. The braces may be applied horizontally or diagonally between the vertical support beams.

In the context of the invention, the front and rear side of the elevator shaft are defined as the sides where the goods enter or exit the elevator shaft. This limits the options for reinforcing the elevator shaft structure at the front and rear side to the application of horizontal braces at the positions where the entry and exit of the goods is not impeded. At the front and rear side of the elevator, the elevator shaft structure may only be reinforced by horizontal braces that are applied at positions between two storage levels of the racking system such that the shuttle with a payload is not hindered by any of the braces while entering or exiting the elevator shaft.

The lateral sides of the elevator shaft may be reinforced by both horizontal and diagonal braces. The braces preferably do not exceed the width of the vertical support beams such that the size of the hoist way is not impacted.

A guide rail can be arranged in a vertical position against or in between both of the lateral sides of the elevator shaft. On both left and right side of the elevator shaft a vertical guide rail may as such be preferably fixed against the braces. These vertical guide rails are preferably centrally arranged against the lateral sides of the elevator shaft.

In the context of the invention, the elevator car is a component that moves up and down the elevator shaft and that provides support for the shuttle and its payload. The elevator car may comprise a horizontal loading platform which represents the loading floor of the elevator. The horizontal loading platform is arranged with a first support structure to receive the shuttle in such way that it can move horizontally on and off the horizontal loading platform, when moving respectively in and out of the elevator. The first support structure may be provided by means of a lower flange or a lower surface of a pair of parallel rails that are configured to receive the wheels of the shuttle, or such means that is installed underneath the horizontal loading platform, or by means that bring such pair of parallel rials into place. In other words, two parallel rails are configured on the horizontal loading platform to receive the wheels of the shuttle on a lower flange or surface of each rail.

In another embodiment, a second support structure may be provided by means of an upper flange or an upper surface of a pair of parallel rails that is configured to receive an offloaded payload from the shuttle. In other words, two same parallel rails are configured on the horizontal loading platform to receive the payload carried but offloaded by the shuttle on an upper flange or surface of each rail.

The shuttle or robotic shuttle of the invention is equipped with a gripping or lifting mechanism suited to the payload type. This can include grippers, suction cups, forks, or custom-designed tools depending on the payload's shape, size, and weight. The gripping mechanism is adjusted or configured to securely grasp the payload without damaging it. The shuttle is preferably equipped with a lifting mechanism that lifts the payload while carrying it, and that lowers the payload when offloading it. When on the horizontal loading platform of the elevator, the weight of the shuttle and the payload will be carried by the first support structure. When the shuttle offloaded the payload, the weight of the shuttle is still carried by the first support structure, but the weight of the payload will be carried by the second support structure.

The elevator car of the invention also may comprise two or more roller pairs that are arranged on each lateral side of the elevator car, and engage with the vertical guide rails. The pair of rollers provide stability to the elevator car while moving in a vertical direction. The stability is ensured in both directions: front to rear, and lateral. The roller pairs may comprise a number of wheels that are in contact with a portion of the profile or flange of the vertical guide rail. The wheels or rollers may be from metal, rubber or plastic material.

The elevator car is suspended by four power transmission means. Such power transmission means may be a leaf chain or a drive belt that engages with the elevator car at a suspension point. Power transmission refers to the process of transmitting mechanical power from one component or system to another within machinery and mechanical systems. Both drive chains, roller chains, and drive belts, V-belts or timing belts, fall under the category of power transmission components because they play a crucial role in transmitting power from a source, a motor or engine, to various mechanical components or systems, such as conveyor belts, pulleys, gears, to perform work.

The elevator car of the invention engages at preferably four suspension points with four power transmission means, i.e. each power transmission means engages with one suspension point. The four suspension points are arranged in pairs at each lateral side of the elevator car. One pair of suspension points is therefore arranged on the left side of the elevator car, and the other pair of suspension points is arranged on the right side of the elevator car.

The suspension points may be arranged directly on lateral sides of the loading platform, or in another embodiment, may be arranged at the upper portions of two laterally arranged additional upright support walls.

According to another aspect of the invention, there is provided an elevator system, wherein said horizontal loading platform is vertically extended by two upright support walls that are arranged on each lateral side of said elevator car, said upright support walls fixedly arranged with their bottom on both lateral sides of said horizontal loading platform, and wherein said pairs of suspension points are arranged at an upper side of each of said upright support walls.

These upright support walls may then be arranged at each lateral side of the loading platform, and provide more stability to the loading platform while suspended. An upright support wall may be welded to the horizontal loading platform on one of the lateral sides in an upright position.

The horizontal loading platform may be vertically extended by two upright support walls that are arranged on each lateral side of said elevator car, said upright support walls fixedly arranged with their bottom on both lateral sides of said horizontal loading platform, and wherein said pairs of suspension points are arranged at an upper side of each of said upright support walls.

The power transmission means may engage directly with the suspension point, or may engage with a damper system that is arranged in between the power transmission means and the suspension point. This additional damper system may ensure a smoother and more stable movement or acceleration of the elevator car.

The combination of the four power transmission means of the elevator system is the hoisting means for the horizontal loading platform, and is configured to hoist the full combined weight of the horizontal loading platform, the shuttle and its payload between the levels of the racks. These power transmission means run up to the highest point of the elevator shaft, where they each return by running over a return wheel in a return wheel assembly.

The return wheel assembly of the invention accommodates the two return wheels for the two power transmission means that are arranged on one of the lateral sides of the elevator shaft. Two return wheel assemblies are therefore configured at both lateral sides at the top of the elevator shaft. The return wheel assembly may not only comprise a single return wheel, but may additionally comprise a guiding wheel that guides the returning power transmission means into the minimal gap space between the edge of the elevator car and the lateral side of the elevator shaft. The return wheel assembly thus ensures that the power transmission means is accurately guided into the elevator shaf, in the space between the horizontal or diagonal braces of the elevator shaft and the edges of the elevator car or the power transmission means that hoists the elevator car. The guiding wheel of the return wheel assembly therefore allows the accurate guiding of the power transmission means in a running direction, whereas the return wheel of the return wheel assembly allows the accurate guiding of the power transmission means in the opposite direction of the running direction. The return wheel assembly ensures that only minimal gap space is required between the elevator car and the side of the elevator shaft.

In another aspect of the invention, the power transmission means may be advantageously arranged as closed loop, for instance as a closed chain, a closed leaf chain or as a closed drive belt. In this configuration, the power transmission means runs at the upper end of the elevator shaft over a return wheel, whereas it engages with the motor assembly by means of a sprocket, gearwheel or belt drive for transmission of the driving power. Intermediary sprockets, gearwheels, pulleys, sheaves, rollers or alike may be configured to alter the driving direction of the power transmission means. The advantage of a closed loop is that no storage space has to be foreseen for the part of the power transmission means, the chain or belt, that is run beyond the motor assembly.

In another aspect of the invention, the power transmission means may be arranged as a rope or cable, for instance a steel rope. In this configuration, the power transmission means runs at the upper end of the elevator shaft over a return wheel, which is configured as a sheave or pulley, whereas it engages with the motor assembly by means of a sheave. A sheave is a pulley with grooves around the circumference. The sheave grips the hoist ropes, so when the sheave rotates, the ropes move too. The sheave is connected to a motor assembly. When the motor assembly turns one way, the sheave raises the elevator; when the motor turns the other way, the sheave lowers the elevator. Intermediary sheaves or pulleys may be configured to alter the driving direction of the power transmission means.

The motor assembly of the invention may comprise at least one motor, which may be an electric motor, and may comprise at least one gear box or alike to transmit the power of the motor while altering the speed and torque of that power. In the case of an elevator, the motor operates at a relatively high speed but low torque, while the output requirement might be a lower speed but higher torque.

The motor assembly of the invention provides a balanced traction or hoisting power to the four power transmission means for hoisting the elevator car in a vertical direction. The four power transmission means therefore are powered simultaneously and are driven at equal speed and direction. The motor assembly may be advantageously installed outside of the elevator shaft and may be configured to take up a limited space of less than a standardized storage location.

In one embodiment, the motor assembly is positioned on the ground level whereas the return wheel assembly is positioned at the top of the elevator shaft. In another embodiment, may the motor assembly be positioned at the top of the elevator shaft, whereas the return wheel assembly is fitted at the bottom of the elevator shaft.

The invention is advantageous in that the hoist way is maximized within the constraints of a standardized storage position. The elevator shaft will therefore occupy the same floor space as a standardized storage location, but the hoist way will still provide sufficient space such that the elevator car can still transport a standardized palletized good on a shuttle. The elevator system can thus be installed within the dimensions of a standardized storage location. It is another advantage of the invention that the elevator shaft of the elevator system can share its four vertical support beams with the neighbouring racks, which provides an optimal stability and an economic usage of components. Sharing the vertical support beams of the elevator as vertical support beams of the racks has the additional advantage that less problems arise from the differences in stiffness of the supporting beams from the racks and independent support beams for the elevator shaft.

In another aspect of the invention, an elevator system is provided, wherein said horizontal loading platform is provided with a second support structure arranged for the shuttle to offload said payload. The payload may be advantageously offloaded from the shuttle on the elevator car, liberating the shuttle for further tasks while the elevator can vertically transport the elevator carrying the payload to another level of the racking system.

In yet another aspect of the invention, an elevator system is provided, wherein said second support structure comprising two supporting rails arranged in parallel with said horizontal movement of the shuttle on said first support structure, and said supporting rails arranged with a sliding conveyor chain on a top surface of said supporting rails to provide a horizontal movement of said payload independently from said shuttle.

In this case, the upper side of both rails of the second support structure is arranged with a horizontally sliding conveyor chain on which the payload may be offloaded by the shuttle. The horizontally sliding conveyor chain may then provide a horizontal movement of said payload independently from the shuttle when activated, and may allow to unload the payload from the elevator without the shuttle being present. Unloading the payload from the elevator may be done onto a receiving shuttle that is waiting at the exit of the elevator, or may be done onto a similar horizontal conveyor chain arranged at the exit of the elevator. The invention is therefore advantageous in that the shuttle can be immediately released for other tasks after offloading the payload onto the second support structure with the sliding conveyor chain.

In another aspect of the invention, an elevator system is provided, wherein said first support structure and said second support structure are configured as a single beam, and wherein said first support structure is arranged as a lower flange of said single beam, and said second support structure is arranged as an upper flange of said single beam. This combination of the first and second support structure into a single beam may be implemented as a U-profile or a Z-profile; both implementations provide a compact and solid beam profile that accommodate the requirements for such a solution.

In another aspect of the invention, an elevator system is provided, wherein said power transmission means are a closed loop leaf chain, a drive belt or a drive ribbon.

In another aspect of the invention, an automated warehouse is provided comprising a storage structure comprising a multitude of rows of racks with at least one lane with at least two, and preferably a plurality of levels, said warehouse being equipped with at least one shuttle adapted to move in horizontal direction on at least one, and preferably a plurality of levels of the lane, said warehouse comprising at least one elevator according to any of the preceding claims.

The advantage of a warehouse according to this invention is that the warehouse comprises the elevator system of the invention of which the elevator shaft can share its four vertical support beams with the neighbouring racks, and which provides an optimal stability and an economic usage of components. Sharing the vertical support beams of the elevator as vertical support beams of the racks has the additional advantage that less problems arise from the differences in stiffness of the supporting beams from the racks and independent support beams for the elevator shaft.

Specific examples and preferred embodiments are set out in the dependent claims. Further advantages and embodiments of the present invention will become apparent from the following description and drawings.

### Brief Description of the Drawings

Fig. 1 illustrates a perspective view of part of an automated warehouse system;
Fig. 2a and 2b illustrate a schematic top view of an elevator system, and a typical arrangement of the components within the elevator shaft;
Fig. 3 illustrates a schematic frontal view of the same elevator system of Fig. 2; the shuttle is shown while carrying the payload;
Fig. 4 illustrates a schematic frontal view of the same elevator system of Fig. 2; the shuttle is shown while not carrying the payload; the payload is offloaded onto a second support structure;
Fig. 5 illustrates a frontal view of the elevator system of the invention, and shows multiple levels of the racking system;
Fig. 6 illustrates a perspective view of part of the elevator system of the invention;
Fig. 7 illustrates a perspective view of a bottom part of the elevator system of the invention;
Fig. 8 illustrates a perspective view of an upper part of the elevator system of the invention;

### Detailed Description of Embodiment(s)

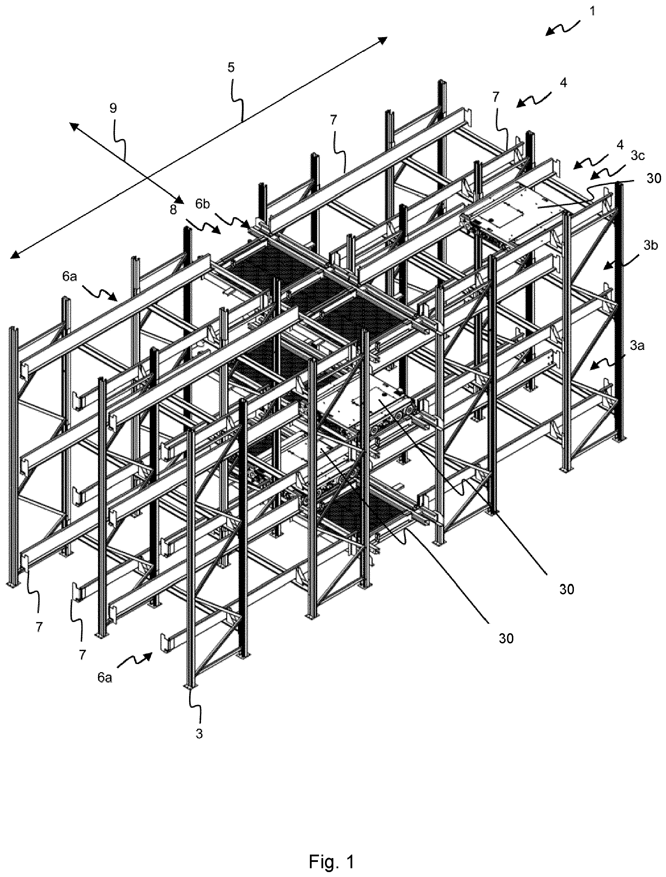

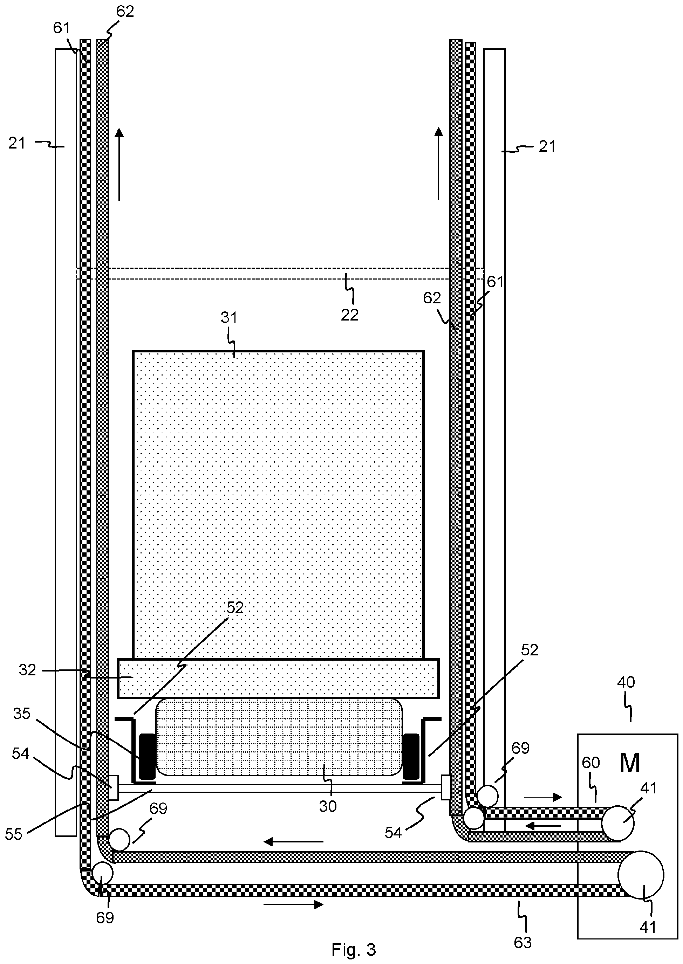

Figure 1 illustrates a perspective view of part of a preferred embodiment of an automated warehouse system 1 including three automated warehouse shuttles 30. The warehouse system 1 generally includes a relatively large storage structure 3 configured to receive goods for storage, for example palletized goods. The storage structure 3 can extend over a plurality of levels, of which for example three levels 3a, 3b, 3c are shown in Figure 1. The storage structure 3 generally extends along at least one storage lane 4 in a first direction 5, and preferably a plurality of storage lanes, which are substantially in parallel to each other. Transverse aisles, generally called transit lanes or main lanes 8, may connect said substantially parallel storage lanes 4, which transverse aisles may also be provided with tracks extending in a second direction 9 substantially transverse to the first direction 5. Storage lanes 4 usually do not include a solid floor, whereas transit lanes 8 may be provided with a solid floor, for example gratings, at predetermined levels. A first track 6a including at least one rail 7, preferably a pair of rails at a distance of each other, extend in said storage lane 4, preferably on every level 3a, 3b, 3c of each storage lane 4. Said rails 7 can preferably include two substantially horizontal surfaces: an upper surface 7a configured to support stored goods and a lower surface 7b (see Fig. 3) configured to receive wheels of an automated shuttle. Said rails may thereto have a specific shape, for example a stepped shape including a lower flange extending inwardly towards the other rail of a pair of rails, and an upper flange extending outwardly, so extending away from the other rail of a pair of rails. The upper flange may then be configured to receive goods for storage while the lower flange may guide the automated warehouse shuttles 30. Other shapes including an upper surface and a lower surface may be used as well. A second track 6b extend in a main lane or transit lane 8. Said second track 6b may have a similar shape as the first track 6a, or more preferably, may have a different shape, since no goods are stored in said main lane 8.

Automated warehouse shuttles 30 may be configured to drive along tracks 6a and 6b of storage lanes 4 and of main lanes 8 respectively of a same level without the shuttles being oriented differently. In other words, shuttles do not turn into another direction. Instead, the shuttles preferably include two sets of wheels which are lowered and/or risen according to the lane in which they are driving. Thereto, at least part of the first track 6a and the second track 6b is located in a first substantially horizontal plane to allow for the automated warehouse shuttles 30 to pass from a first track 6a to a second track 6b. In particular, said first substantially horizontal plane may include the lower surface of a rail 7 of a first track 6a as well as a running face of a rail of a second track 6b.

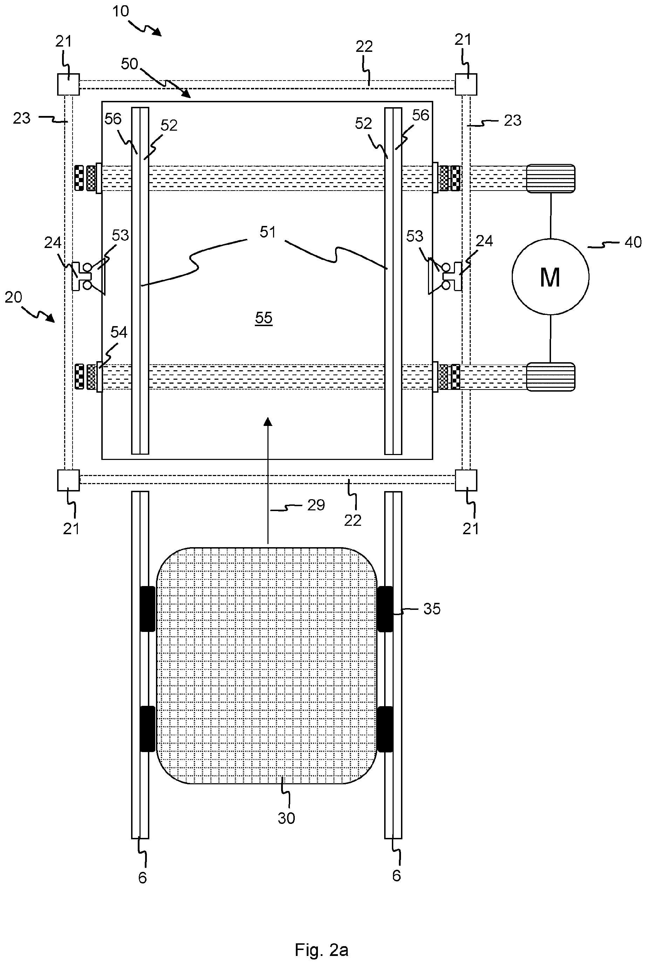

Figure 2a illustrates a schematic top view of a preferred embodiment of an elevator system 10. The front of the shaft is depicted at the bottom of the figure; the rear of the shaft is drawn at the top. The lateral sides, left and right, are drawn at the respectively left and right side of the drawing. The figures represents a top view of the elevator system, where a motor assembly 40 is positioned on the right side of the elevator shaft 20. The elevator shaft 20 comprises four vertical support beams 21, which may be part of, and shared with, the storage structure 3. Braces 22, 23 are arranged between the vertical support beams 21 and reinforce the shaft structure. On the lateral side of the shaft, left and right side, the lateral braces 23 may be arranged horizontally and/or diagonally. At the front and rear side of the shaft, the braces 22 may be only arranged horizontally for the reason that the entry or exit of the shuttle 30 carrying the payload 31 should not be hindered by the positioning of the reinforcing braces 22. It should be noted that the dimensions of the braces 22, 23 should not exceed the dimensions of the vertical support beams 21 in order to limit use of available space as much as possible.

At the lower part of the drawing, a shuttle 30 is represented wherein the arrow 29 indicates the direction for the shuttle to enter the elevator shaft 20 at the front side. The shuttle 30 drives with its wheels 35 on a track 6 of the automated warehouse system 1 into the elevator shaft 20, and onto the elevator car 50. The elevator car 50 moves up and down inside the elevator shaft 20, and comprises a horizontal loading platform 55, on which a first support structure 51 is arranged. This first support structure 51 may be provided by means of a lower flange or a lower surface of a pair of parallel rails 52 onto which the shuttle can drive when entering the elevator shaft 20. The first support structure 51 carries at least the weight of the shuttle 30.

On the lateral sides and inside the elevator shaft 20, two vertical guide rails 24 are arranged. The guide rails 24 are fixedly arranged with the lateral braces 23, and are preferably centrally arranged against the lateral sides of the elevator shaft 20 at identical distances from the respective vertical support beams 21.

The vertical guide rails 24 are configured to engage with two roller pairs 53 that are arranged on each lateral side of the elevator car 50. The roller pairs 53 ensure a smooth and stable movement of the elevator car 50 when moving up and down in the elevator shaft.

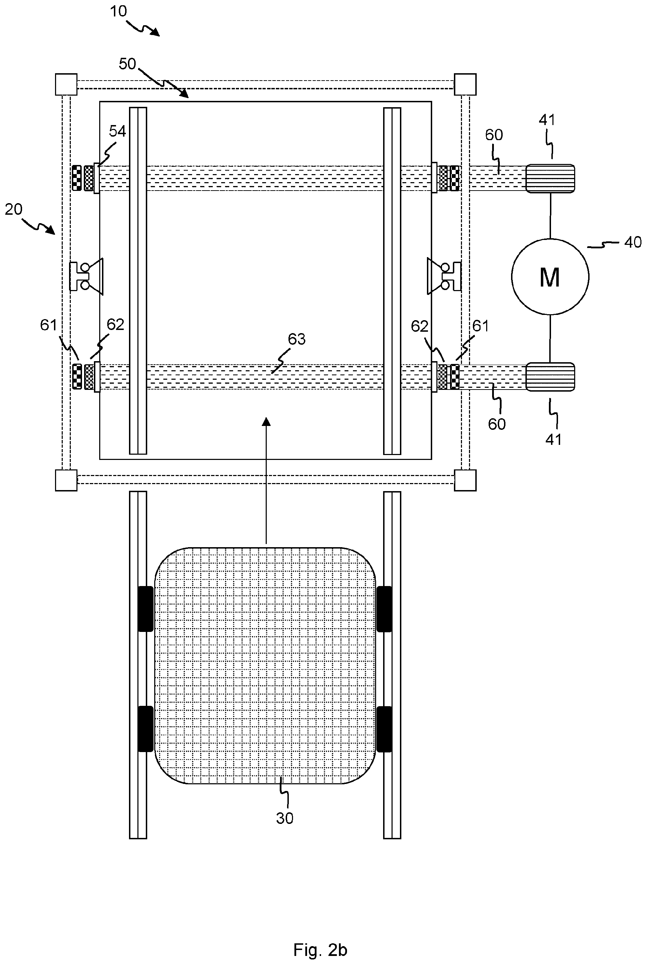

Figure 2b illustrates the same schematic top view of a preferred embodiment of an elevator system 10. The drawing shows the motor assembly 40, which may comprise a motor, which may be an electric motor, and also may comprise at least one gear box or alike to transmit the power of the motor while altering the speed and torque of that power. This is not shown in the picture. The driving power of the motor assembly is transmitted through a sprocket, gearwheel or belt drive 41 onto the power transmission means 60.

The power transmission means 60 is connected to the elevator car 50 by means of four suspension points 54, which are arranged in pairs at the lateral sides of the elevator car. In the drawing, the power transmission means are separated into different segments 60, 61, 62, 63. When considering a single power transmission means that is connected to a single suspension point 54, a first segment 60 of the power transmission means runs from the motor assembly 40 horizontally to an intermediary sprocket 69, gearwheel 69 or pulley 69, such that the power transmission means 62 runs upwards into the elevator shaft. There it first connects to the suspension point 54 that is attached to hoist the elevator car 50. This segment of the power transmission means 62 continues to run upwards until it reaches the return wheel assembly and inverts the running direction of the power transmission means 61. Both segments of the power transmission means 62 and 61 are arranged substantially in parallel when running into the elevator shaft. The segments 61, 62 are arranged close to each other such that the used space between the elevator side and the elevator car is minimized.

In order to reach both sides of the elevator car, one segment of the power transmission means 63 runs horizontally underneath the elevator shaft 20 to an intermediary sprocket 69, gearwheel 69 or pulley 69, such that the power transmission means 62 runs upwards into the elevator shaft, but this time on the right side of the drawing.

The combination of the four power transmission means, two at the left and two at the right side of the elevator car 50, of the elevator system is the hoisting means for the horizontal loading platform 55, and is configured to hoist the full combined weight of the horizontal loading platform 55, the shuttle and its payload between the levels of the racks.

Figure 3 illustrates a schematic frontal view of the same embodiment of the elevator system of Figure 2. The vertical support beams 21 together with horizontally arranged reinforcing braces 22 make up the structural elements of the elevator shaft 20. As can be seen in the drawing, the horizontally arranged brace 22 is arranged at a position that does not hinder the shuttle 30 and its load 31 when entering the elevator shaft.

The drawing shows the shuttle 30 that carries a payload 31 that is positioned on a pallet or skid 32. The weight of the pallet 32 and payload 31 rests on the upper side of the shuttle 30, that is depicted in a loaded condition. The full weight of the shuttle 30, pallet 32 and payload 31 rests, when the shuttle is in the loaded condition, on the wheels 35 of the shuttle, and onto the lower flange or a lower surface of a pair of parallel rails 52.

The pair of parallel rails 52 make up the first support structure 51 that rests on the surface of the horizontal loading platform 55. The horizontal loading platform is connected with the power transmission means at the suspension points 54, left and right. In the frontal view of the drawing, only two of the four suspension points are depicted.

The power transmission means are indicated as different segments 60, 61, 62, 63, of which the running directions are indicated by the arrows when moving the elevator car upwards. Segment 60 of the power transmission means engages with the motor assembly 40 of which the driving power is transmitted through a sprocket, gearwheel, sheave or belt drive 41 onto the power transmission means 60, 63. The segment 60 connects with the right side of the elevator car, whereas segment 63 runs underneath the elevator shaft to connect with the left side of the elevator car.

Segments 63 first runs horizontally underneath the elevator shaft 20 to an intermediary sprocket 69, gearwheel 69 or pulley 69, such that the power transmission means 62 runs upwards into the left side of the elevator shaft. Segment 60 first runs horizontally and directly to an intermediary sprocket 69, gearwheel 69 or pulley 69, such that the power transmission means 62 runs upwards into the left side of the elevator shaft.

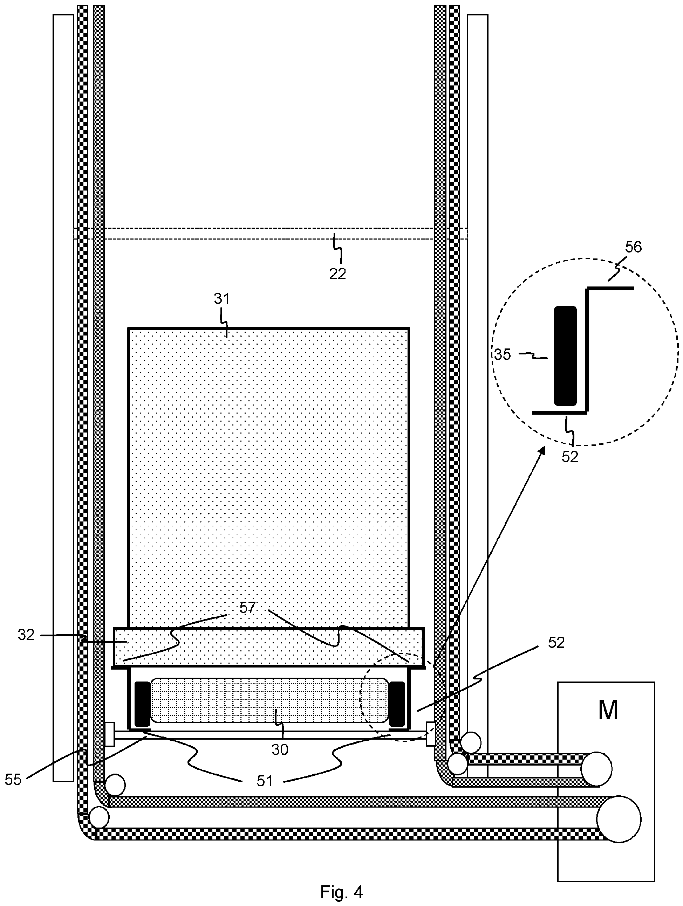

Figure 4 illustrates the same schematic frontal view of the same embodiment of the elevator system of Figure 3, but in this drawing the shuttle 30 is in an unloaded condition. The payload 31 that is positioned on a pallet or skid 32 rests on the upper side of a second support structure 57. The full weight of the pallet or skid 32 and payload 31 rests, when the shuttle is in the unloaded condition, onto the upper flange or a upper surface of a pair of parallel rails 56. The pair of parallel rails 56 make up the second support structure 57 that rests on the surface of the horizontal loading platform 55.

The upper side of both parallel rails 56 of the second support structure 57 is optionally arranged with a horizontally sliding conveyor chain on which the payload 31, 32 may be offloaded by the shuttle. The horizontally sliding conveyor chain may then provide a horizontal movement of said payload independently from the shuttle when activated, and may allow to unload the payload from the elevator without the shuttle being present.

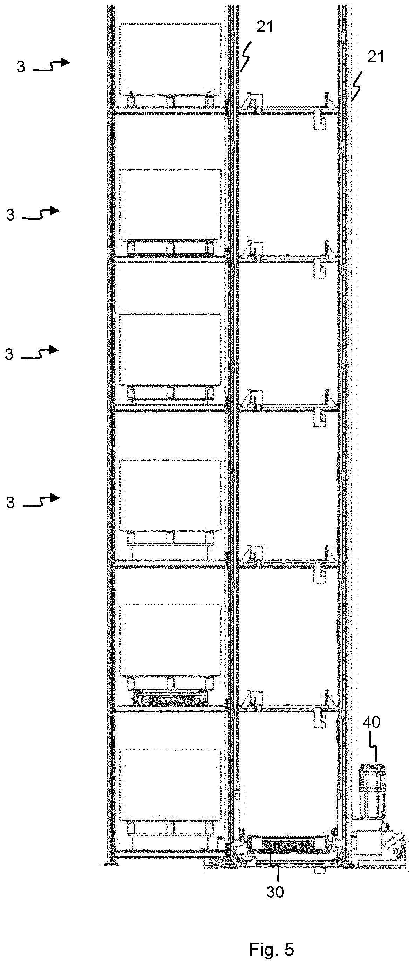

Figure 5 illustrates a schematic frontal view of an embodiment of the elevator system 10 of the invention, that is partially integrated in to a automated warehouse system 1. The drawing comprises six levels 3 which can be served by the elevator system 10. The vertical support beams 21 are shown, of which the left one is integrated into the automated warehouse system 1, and is shared with a rack structure on the left side.

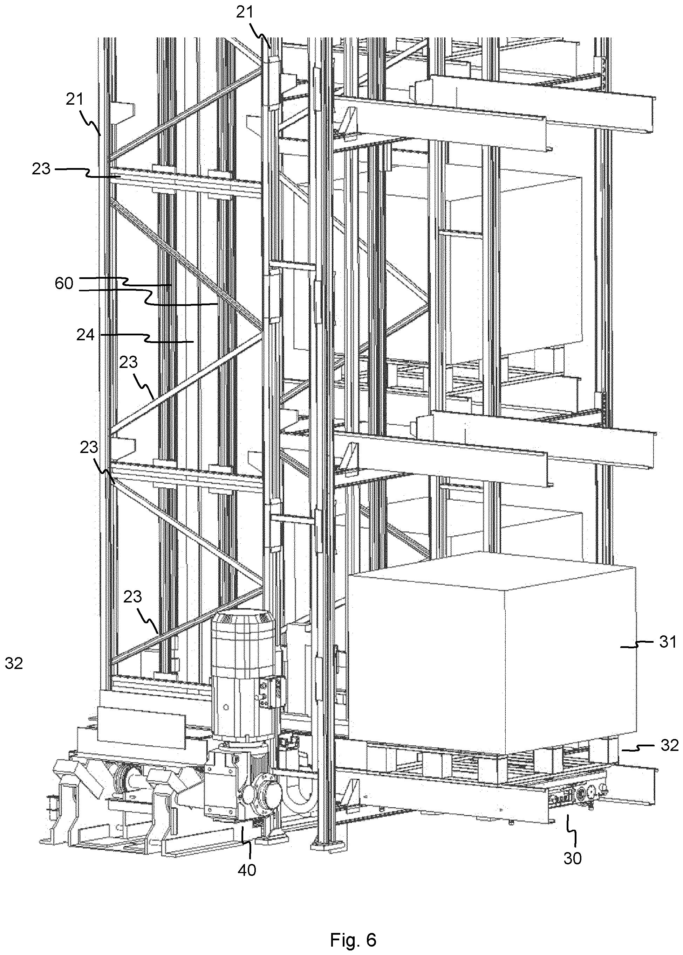

Figure 6 illustrates a perspective view of a lower part of the elevator system of the invention, wherein a shuttle 30 is loaded with a payload 31 on a pallet or skid 32, ready for entering the elevator shaft 20. The shaft elevator comprises the two visible vertical support beams 21, which make up one of the lateral sides of the elevator shaft. Between the two vertical support beams, a number of diagonally and horizontally arranged braces 23 are visible. The vertical guide beam 24 is visible and extends along the entire shaft length. Two sections of the power transmission means 60 are visible and are arranged in parallel. The two visible sections are arranged to connect with one side of the elevator car.

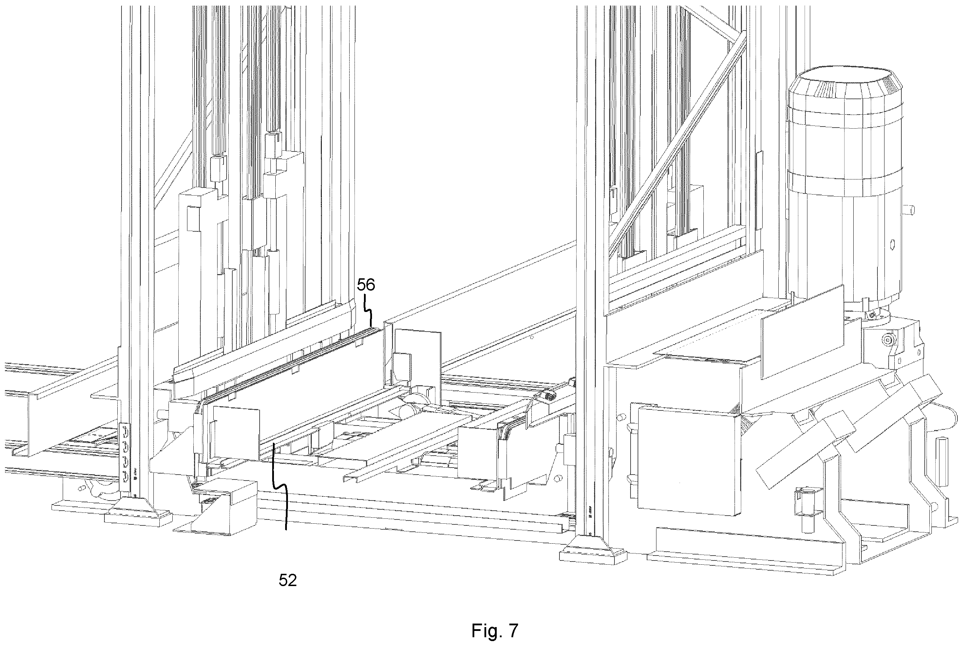

Figure 7 illustrates a perspective view of an embodiment of a lower part of the elevator system of the invention, and showing in more detail some of the parts of the elevator car 50. The pair of parallel rails 52 are visible that make up the first support structure 51, and that rests on the surface of the horizontal loading platform 55. Also the parallel rails 56 that are arranged with the horizontally sliding conveyor chain of the second support structure 57 are visible.

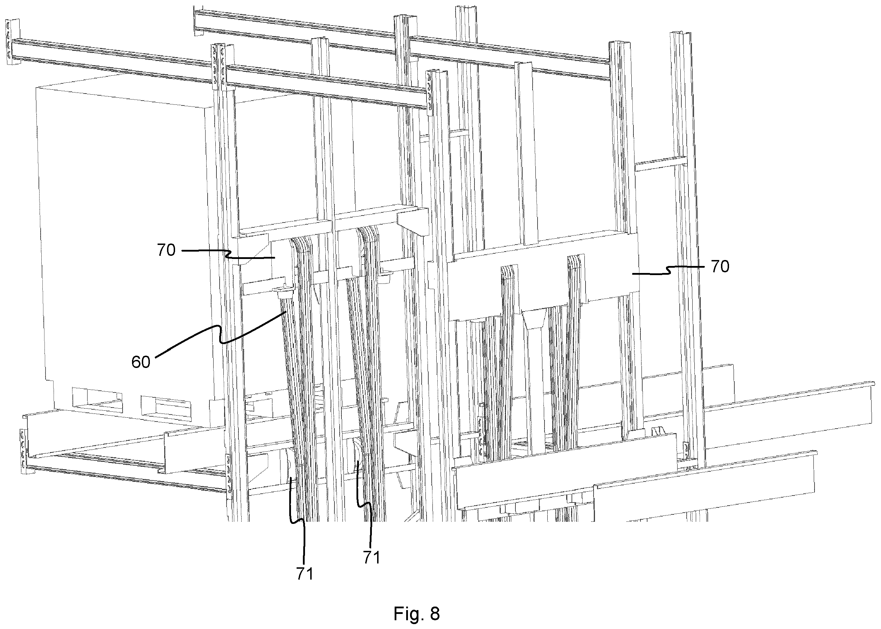

Figure 8 illustrates a perspective view of an embodiment of an upper part of the elevator system, and shows 2 return wheel assemblies 70 over which the power transmission means 60 changes direction. The drawing also shows the guiding wheels 71 that accurately guide the power transmission means 60 into the elevator shaft. In this embodiment, the return wheel assemblies are mounted between the vertical support beams.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. An elevator system [10] for transporting a shuttle [30] with a payload [31] in vertical direction between at least two levels in an automated warehouse [1] comprising at least one lane on each level [3], said shuttle being adapted to move in horizontal direction on said lane on each level, said elevator system comprising:
- an elevator shaft [20], comprising
∘ at least four vertical support beams [21] positioned in parallel in four corners of said elevator shaft [20] and defining a hoist way of said elevator shaft,
∘ braces [22, 23] arranged between said vertical support beams [21] and providing structural support to said elevator shaft, said braces leaving accessible openings at a front and rear side of said elevator shaft for said shuttle with the payload to enter and exit said elevator shaft,
∘ a vertical guide rail [24] arranged at each lateral side of said elevator shaft,
- an elevator car [50] movable in vertical direction within the hoist way of the elevator shaft, the elevator car comprising:
∘ a horizontal loading platform [55] provided with a first support structure [51] adapted to carry the shuttle during the vertical and/or horizontal movement,
∘ two roller pairs [53] centrally arranged on each lateral side of said elevator car, and configured to engage with each of said vertical guide rails [24],
∘ two pairs of suspension points [54], each pair of suspension points distributed at equal distances from said roller pair [53] on said lateral side of said elevator car [50],
- four power transmission means [60, 61, 62, 63] configured to attach to said suspension points [54] of said elevator car, configured to loop around a return wheel assembly [70] and configured to engage with a motor assembly [40],
- said motor assembly configured to provide a balanced traction to said four power transmission means [60, 61, 62, 63] for hoisting said elevator car in a vertical direction, said motor being installed outside of said hoist way,
- said return wheel assembly [70] configured above a highest hoisting point at each lateral side of said elevator shaft to loop and return two of said four power transmission means[60, 61, 62, 63],
and wherein said return wheel assembly [70] guides said power transmission means [60, 61, 62, 63] between each lateral side of said elevator shaft and said elevator car.

2. An elevator system according to claim 1, wherein said horizontal loading platform [55] is vertically extended by two upright support walls that are arranged on each lateral side of said elevator car, said upright support walls fixedly arranged with their bottom on both lateral sides of said horizontal loading platform, and wherein said pairs of suspension points are arranged at an upper side of each of said upright support walls.

3. An elevator system according to any of the preceding claims, wherein said horizontal loading platform is provided with a second support structure arranged for the shuttle to offload said payload.

4. An elevator system according to claim 3, wherein said second support structure [57] comprising two supporting rails [56] arranged in parallel with said horizontal movement of the shuttle on said first support structure, and said supporting rails arranged with a sliding conveyor chain on a top surface of said supporting rails to provide a horizontal movement of said payload independently from said shuttle.

5. An elevator system according to claim 3, wherein said first support structure and said second support structure are configured as a single beam, and wherein said first support structure is arranged as a lower flange of said single beam, and said second support structure is arranged as an upper flange of said single beam.
5. An elevator system according to any of the preceding claims, wherein said power transmission means are a closed loop leaf chain, a drive belt, a drive ribbon, a rope or a cable.

6. An elevator system according to any of the preceding claims, wherein said power transmission means run over multiple pulleys or sheaves.

7. An automated warehouse comprising a storage structure comprising a multitude of rows of racks with at least one lane with at least two, and preferably a plurality of levels, said warehouse being equipped with at least one shuttle adapted to move in horizontal direction on at least one, and preferably a plurality of levels of the lane, said warehouse comprising at least one elevator according to any of the preceding claims.

8. An automated warehouse according to claim 7, wherein said four vertical support beams of said elevator shaft are shared with vertical support beams of said storage structure.

9. An automated warehouse according to any one of the claim 7 to 8, wherein said automated warehouse is a warehouse for storing goods on pallets.
